# EUROPEAN PATENT APPLICATION

(11) **EP 3 228 828 A1**
(43) Date of publication of application: **11.10.2017**
(21) Application number: 17165204.3
(22) Date of filing: 06.04.2017
(51) Int. Cl.: F01D 11/00, F01D 25/24, F16J 15/3288

(54) **INTEGRATED BRUSH SEALS**

(30) Priority: 07.04.2016 US 201615093247
(71) Applicant: United Technologies Corporation, Farmington, CT 06032 (US)
(72) Inventor: RIOUX, Philip Robert, North Berwick, ME Maine 03906 (US)
(74) Representative: Bridge, Kerry Ann

(57) **Abstract**

An engine component for a gas turbine engine includes a main body (66) and a plate (88). The engine component also includes a plurality of wire bristles (90) disposed between the plate and the main body. A joint (92) connects both the plate and the wire bristles to the main body and the joint is configured to prevent gas leakage between the main body, the plate, and the plurality of wire bristles.

## Description

### BACKGROUND

The present invention relates to gas turbine engines, and more specifically to seals for use in turbine sections of gas turbine engines.

Gas turbine engines, such as those that power modern commercial and military aircraft, typically include a compressor to pressurize inflowing air, a combustor to burn a fuel in the presence of the pressurized air, and a turbine to extract energy from the resulting combustion gases. The turbine may include multiple rotatable blade arrays separated by multiple stationary vane arrays. A turbine blade array is typically situated radially within a blade outer air seal system or assembly (or "BOAS" system or assembly). In other words, a BOAS assembly may span an outer endwall between a plurality of static vane arrays situated upstream and downstream of the blade array. The BOAS assembly thus forms an outer (cylindrical) wall configured to confine a stream of hot post-combustion gases.

Cooling air is often provided to the BOAS assembly to enable operation while exposed to the hot combustion gases. This cooling air may be bled from one or more air compartments situated in proximity to the BOAS assembly and through one or more bleed apertures disposed within the BOAS assembly. A higher pressure is typically required to direct cooling air through the BOAS assembly. Effective seals may prevent leakage of cooling air between the BOAS assembly and adjacent component assemblies (e.g., vanes, vane arrays, and vane supports), thus allowing cooling air to flow within segments of the BOAS assembly.

As the turbine is heated by the combustor exhaust and pressurized, the cooling air may undesirably escape into the turbine through a variety of gaps between the BOAS assembly and adjacent vane arrays and other pathways formed as a result of thermal and maneuvering stresses placed upon the engine parts during operation.

Brush seals are one kind of seal that has been used to close gaps between BOAS assemblies and adjacent component assemblies. Traditionally, brush seals include wire bristles that are fixed between two plates. A traditional brush seal is mechanically connected to the BOAS assembly or an adjacent component so that the brush seal can be disconnected from the BOAS assembly or the adjacent component after the brush seal wears out. However, the brush seal is prone to gas leakage at the mechanical connection between the brush seal and the BOAS assembly or adjacent assembly. This air leakage impairs the performance and efficiency of the gas turbine engine, such as reduced flow output and decreased fuel efficiency.

### SUMMARY

In one aspect of the invention, an engine component for a gas turbine engine includes a main body and a plate. The engine component also includes a plurality of sealing elements disposed between the plate and the main body. A joint connects both the plate and the plurality of wire bristles to the main body and the joint is configured to prevent gas leakage between the main body, the plate, and the plurality of wire bristles.

In another aspect of the invention, a gas turbine engine includes a first engine component and a second engine component. A flowpath extends between the first engine component and the second engine component. The gas turbine engine also includes a brush seal. The brush seal includes a plate and a plurality of wire bristles. The plurality of wire bristles is disposed between the plate and the first engine component. The plurality of bristles extends across the flowpath from the first engine component toward the second engine component. A joint connects both the plate and the plurality of wire bristles to the first engine component and the joint is configured to prevent gas leakage between the first engine component and the brush seal.

In another aspect of the invention, a method for assembling a brush seal inside a leakage flowpath between a first engine component and a second engine component includes connecting a plurality of wire bristles to a plate. The plurality of wire bristles and the plate are positioned relative the first engine component such that the plurality of wire bristles is disposed between the plate and the first engine component. The plurality of wire bristles and the plate are welded to the first engine component. The first engine component is assembled relative the second engine component such that the plurality of wire bristles extends into the leakage flowpath from the first engine component toward the second engine component.

Persons of ordinary skill in the art will recognize that other aspects and embodiments of the present invention are possible in view of the entirety of the present disclosure, including the accompanying figures.

### BRIEF DESCRIPTION OF THE DRAWINGS

FIG. 1 is a partial cross-sectional view of a gas turbine engine.
FIG. 2 is a cross-sectional view of a vane stage and a rotor stage of a high pressure turbine section of the gas turbine engine from FIG. 1.
FIG. 3 is a cross-sectional view of an embodiment of a brush seal.
FIG. 4 is a cross-sectional view of a first alternative embodiment of a brush seal.
FIG. 5 is a cross-sectional view of a second alternative embodiment of a brush seal.

While the above-identified drawing figures set forth one or more embodiments of the invention, other embodiments are also contemplated. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings. Like reference numerals identify similar structural elements.

### DETAILED DESCRIPTION

This disclosure relates to a brush seal with wire bristles that are connected by a joint between a plate and to a surrounding engine component, such as a blade outer air seal (BOAS), a BOAS support, or a vane endwall. The joint is configured to prevent gas leakage between the main body, the plate, and the plurality of wire bristles, such as a weld joint. The disclosed brush seal and engine component contains fewer parts than prior art brush seals and provides as much as a 20% reduction in gas flow leakage over prior art brush seals. The brush seal and engine component are discussed below with reference to the figures.

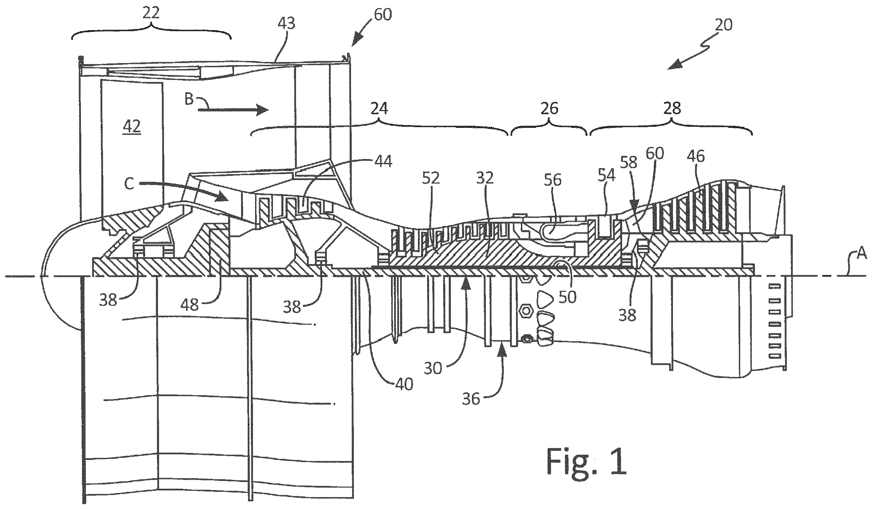

FIG. 1 is a quarter-sectional view that schematically illustrates example gas turbine engine 20 that includes fan section 22, compressor section 24, combustor section 26 and turbine section 28. Alternative engines might include an augmenter section (not shown) among other systems or features. Fan section 22 drives air along bypass flowpath B while compressor section 24 draws air in along core flowpath C where air is compressed and communicated to combustor section 26. In combustor section 26, air is mixed with fuel and ignited to generate a high pressure exhaust gas stream that expands through turbine section 28 where energy is extracted and utilized to drive fan section 22 and compressor section 24.

Although the disclosed non-limiting embodiment depicts a turbofan gas turbine engine, it should be understood that the concepts described herein are not limited to use with turbofans as the teachings may be applied to other types of turbine engines; for example, an industrial gas turbine; a reverse-flow gas turbine engine; and a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example gas turbine engine 20 generally includes low speed spool 30 and high speed spool 32 mounted for rotation about center axis A of gas turbine engine 20 relative to engine static structure 36 via several bearing systems 38. It should be understood that various bearing systems 38 at various locations may alternatively or additionally be provided.

Low speed spool 30 generally includes inner shaft 40 that connects fan 42 and low pressure (or first) compressor section 44 to low pressure (or first) turbine section 46. Inner shaft 40 drives fan 42 through a speed change device, such as geared architecture 48, to drive fan 42 at a lower speed than low speed spool 30. High-speed spool 32 includes outer shaft 50 that interconnects high pressure (or second) compressor section 52 and high pressure (or second) turbine section 54. Inner shaft 40 and outer shaft 50 are concentric and rotate via bearing systems 38 about center axis A.

Combustor 56 is arranged between high pressure compressor 52 and high pressure turbine 54. In one example, high pressure turbine 54 includes at least two stages to provide double stage high pressure turbine 54. In another example, high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of low pressure turbine 46 as related to the pressure measured at the outlet of low pressure turbine 46 prior to an exhaust nozzle.

Mid-turbine frame 58 of engine static structure 36 can be arranged generally between high pressure turbine 54 and low pressure turbine 46. Mid-turbine frame 58 further supports bearing systems 38 in turbine section 28 as well as setting airflow entering the low pressure turbine 46.

The gas flow in core flowpath C is compressed first by low pressure compressor 44 and then by high pressure compressor 52 mixed with fuel and ignited in combustor 56 to produce high speed exhaust gases that are then expanded through high pressure turbine 54 and low pressure turbine 46. Mid-turbine frame 58 includes vanes 60, which are in the core flowpath and function as an inlet guide vane for low pressure turbine 46. Utilizing vane 60 of mid-turbine frame 58 as the inlet guide vane for low pressure turbine 46 decreases the axial length of the low pressure turbine 46 without increasing the axial length of mid-turbine frame 58. Reducing or eliminating the number of vanes in low pressure turbine 46 shortens the axial length of turbine section 28. Thus, the compactness of gas turbine engine 20 is increased and a higher power density may be achieved.

The disclosed gas turbine engine 20 in one example is a high-bypass geared aircraft engine. In a further example, gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, gas turbine engine 20 includes a bypass ratio greater than about ten (10:1) and the fan diameter is significantly larger than an outer diameter of low pressure compressor 44. It should be understood, however, that the above parameters are only exemplary of one embodiment of a gas turbine engine including a geared architecture and that the present disclosure is applicable to other gas turbine engines.

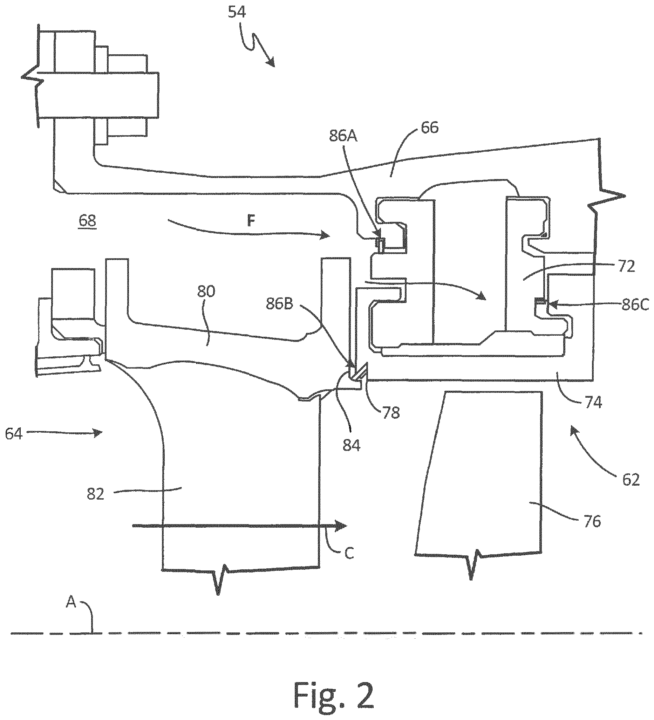

FIG. 2 is a cross-sectional view of high pressure turbine section 54 with rotor assembly 62 and vane assembly 64. Vane assembly 64 is positioned upstream from rotor assembly 62. Core casing 66 is disposed around both rotor assembly 62 and vane assembly 64 and is spaced radially from rotor assembly 62 and vane assembly 64 to form plenum 68. Cooling airflow F can be directed through plenum 68 to cool the components of high pressure turbine section 54. Cooling airflow F travels through plenum 68 at pressures higher than the pressure of the hot combustion gases in the core flowpath C.

Rotor assembly 62 includes mounting structure 72, blade outer air seal (BOAS) 74, and turbine blades 76 (only one of which is shown in FIG. 2). Mounting structure 72 connects BOAS 74 to core casing 66 and spaces BOAS 74 relative turbine blades 76. BOAS 74 and mounting structure 72 are static components that do not rotate about center axis A. BOAS 74 includes forward end 78 that extends toward vane assembly 64. BOAS 74 forms an outer diameter endwall for the portion of core flowpath C in rotor assembly 62. BOAS 74 is cooled by cooling airflow F, thereby allowing BOAS 74 to withstand the high temperatures of the hot combustion gases exiting the combustor 56 (shown in FIG. 1). As discussed in greater detail below, a seal is needed between rotor assembly 62 and BOAS 74 to help prevent cooling airflow F from leaking between rotor assembly 62 and vane assembly 64 and bleeding into core flowpath C. Allowing cooling airfoil F to leak between vane assembly 64 and rotor assembly 62 reduces the pressure of cooling airflow F in plenum 68 and inhibits cooling airflow F from reaching and cooling BOAS 74. The mass flow rate of cooling airflow F can be increased to compensate for leakage of cooling airflow F, however, increasing the mass flow rate of cooling airflow F would decrease the operating efficiency and fuel efficiency of gas turbine engine 20. Thus, proper sealing between rotor assembly 62 and vane assembly 64 is necessary to sustain cooling airflow F in plenum 68 without decreasing fuel efficiency of gas turbine engine 20.

As shown in FIG. 2, vane assembly 64 includes vane outer diameter (OD) endwall 80 and at least one airfoil 82 extending from vane OD endwall 80 toward center axis A. Vane OD endwall 80 is positioned radially outward from center axis A and can be aligned with BOAS 74. Vane OD endwall 80 is a static component that does not rotate about center axis A. Vane OD endwall 80 is to prevent gas leakage between the main body, the plate, and the plurality of wire bristles is an endwall or platform that forms the outer diameter flowpath across vane assembly 64 to direct combustion gases from combustor 56 to rotor assembly 62. Vane OD endwall 80 includes aft end 84 positioned axially upstream from forward end 78 of BOAS 74.

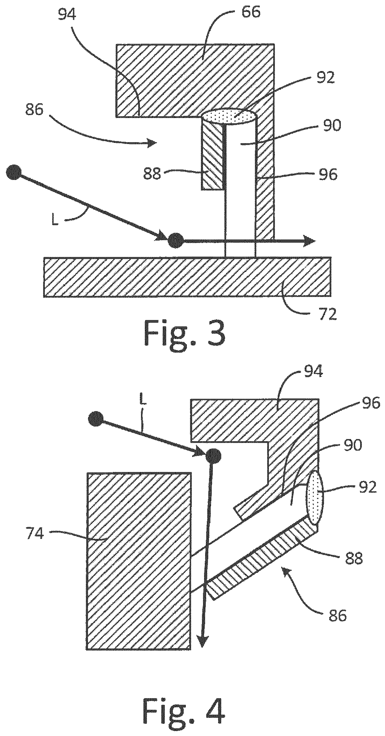

At least one brush seal 86 is connected to core casing 66, mounting structure 72, BOAS 74, and/or vane OD endwall 80 to guide cooling airflow F through plenum 68 and prevent cooling airflow F from leaking into core flowpath C. As shown in FIG. 2, a first brush seal 86A is connected to core casing 66 and extends radially between core casing 66 and mounting structure 72. A second brush seal 86B is connected to BOAS 74 and extends at an angle to aft end 84 of vane OD endwall 80. A third brush seal 86C is connected to mounting structure 72 and extends axially toward BOAS 74. As discussed below with reference to FIG. 3, brush seal 86 is joined to an engine component (such as core casing 66, mounting structure 72, BOAS 74, or vane OD endwall 80) in a manner that prevents cooling airflow F from leaking between the engine component and the brush seal 86.

FIG. 3 is a cross-sectional view of one exemplary embodiment of brush seal 86 connected to a main body of a first engine component and extending toward a second engine component. The first engine component in FIG. 3 can be core casing 66. The second engine component in FIG. 3 can be mounting structure 72 that supports BOAS 74. Brush seal 86 includes plate 88, wire bristles 90, and joint 92. As shown in FIG. 3, the main body of core casing 66 includes inner surface 94 and backface 96.

Inner surface 94 of core casing 66 can extend generally in an axial direction, the axial direction being parallel to center axis A shown in FIGS. 1. Backface 96 of core casing 66 can extend radially inward from inner surface 94. Mounting structure 72 is disposed radially inward from inner surface 94 and backface 96 of core casing 66. Leakage flowpath L is defined by a radial gap between core casing 66 and mounting structure 72. Inner surface 94 of core casing 66 is also disposed radially outward of brush seal 86.

Wire bristles 90 of brush seal 86 are a collection of metal wire bristles that are arranged into an annular bristle pack that hoops around center axis A and around mounting structure 72. As shown in FIG. 3, wire bristles 90 are disposed axially between plate 88 and backface 96 such that wire bristles 90 extend radially inward from inner surface 94 of core casing 66 and plate 88 to mounting structure 72. Wire bristles 90 radially traverse and obstruct leakage flowpath L. Wire bristles 90 can be formed from a cobalt alloy or any other material that can withstand the high temperatures present in high pressure turbine section 54 during engine operation.

Plate 88 shown in FIG. 3 is a flat annular plate that extends circumferentially around center axis A and that extends radially relative center axis A. Plate 88 can be formed from steel, nickel, or any other material that can be formed into a flat annular plate and able to withstand the high temperatures present in high pressure turbine section 54 during engine operation.

Joint 92 connects both plate 88 and wire bristles 90 to core casing 66. Joint 92 is also configured to prevent air or any other gas from leaking between core casing 66, plate 88, and wire bristles 90. Joint 92 can prevent air or gas from leaking between core casing 66, plate 88, and wire bristles 90 by integrally joining plate 88 and wire bristles 90 to inner surface 94 of core casing 66. For example, joint 92 can be a weld joint connecting wire bristles 90 to both plate 88 and core casing 66, thus making brush seal 86 and core casing 66 into an integral engine component that cannot be mechanically disassembled. In other embodiments, joint 92 can be a braze joint, an epoxy joint, or any other joint that would connect wire bristles 90 and plate 88 to core casing 66 and prevent air or any other gas from leaking between core casing 66, plate 88, and wire bristles 90.

During the manufacturing process of brush seal 86 as embodied in FIG. 3, wire bristles 90 can first be connected to plate 88 by a sacrificial bond. For example, wire bristles 90 can be tacked to plate 88. In another example, wire bristles 90 can be adhered to plate 88 by an epoxy or other adhesive. After wire bristles 90 are connected to plate 88, wire bristles 90 and plate 88 are positioned relative core casing 66 such that wire bristles 90 are disposed axially between plate 88 and backface 96 of core casing 66. Plate 88 and wire bristles 90 are then welded to core casing 66 at the interface between plate 88, wire bristles 90, and inner surface 94 of core casing 66. Plate 88 and wire bristles 90 can be welded to core casing 66 by arc welding, electron beam welding, solid state welding, or any other suitable welding process. After plate 88 and wire bristles 90 are welded to core casing 66, core casing 66 can be assembled into gas turbine engine 20 around mounting structure 72 such that wire bristles 90 extend into leakage flowpath L from core casing 66 to mounting structure 72.

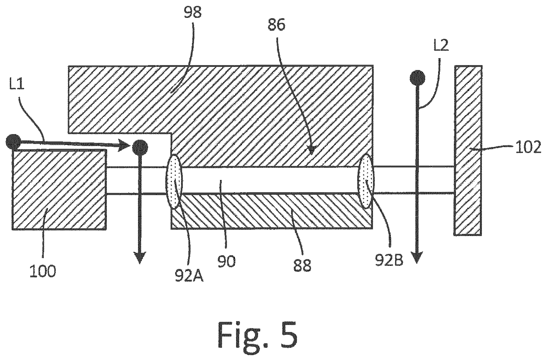

During operation of gas turbine engine 20 (shown in FIG. 1), cooling airflow F flows through cooling plenum 68 (shown in FIG. 2), and comes into contact with core casing 66 and mounting structure 72. A portion of cooling airflow F can enter the gap between core casing 66 and mounting structure 72 where cooling airflow F is obstructed by wire bristles 90 of brush seal 86. Backface 96 helps support wire bristles 90 and helps wire bristles 90 resist deformation in the axial direction. Joint 92 prevents cooling airflow F from leaking between wire bristles 90 and core casing 66. If any portion of cooling airflow F leaks across brush seal 86 the leakage occurs along leakage flowpath L through wire bristles 90. Because cooling airflow L cannot leak across joint 92 and between wire bristles 90 and core casing 66, joint 92 substantially reduces the amount of gas leakage across brush seal 86 over prior art brush seals that rely on mechanical connections. Analysis has shown that joint 92 can reduce leakage across brush seal 86 by as much as 20% in comparison with the leakage across prior art brush seals. Brush seal 86 is also lighter in weight in comparison to prior art brush seals because brush seal 86 does not include mechanical fasteners and multiple plates as used in prior art brush seals. Reducing the weight of brush seal 86 reduces the overall weight of gas turbine engine 20, which increases the fuel efficiency of gas turbine engine 20. While FIG. 3 shows wire bristles 90 of brush seal 86 extending radially between two engine components, wire bristles 90 can extend axially between two engine components or can extend at a tapered angle between two components, as discussed below with reference to FIGS. 4 and 5.

FIG. 4 is a cross-sectional view of a second exemplary embodiment of brush seal 86 connected to a main body of a first engine component and extending toward a second engine component. The first engine component in FIG. 4 can be outer endwall 94 of mid-turbine frame 58. The second engine component in FIG. 4 can be BOAS 74. As shown in FIG. 4, the main body of outer endwall 94 includes tapered face 96. Plate 88 in the embodiment of FIG. 4 is a ring that extends around center axis A (shown in FIG. 1) of the gas turbine engine and extends axially relative the center axis and tapers radially outward relative center axis A. Wire bristles 90 are arranged around tapered plate 88 and extend axially forward from plate 88 toward BOAS 74 at an angle parallel to plate 88. Tapered face 96 of outer endwall 94 is disposed around wire bristles 90 such that wire bristles 90 are disposed between plate 88 and tapered face 96 of outer endwall 94. Joint 92 in the embodiment of FIG. 4 is a weld joint that connects plate 88 and wire bristles 90 to outer endwall 94 and prevents air or other gases from leaking between wire bristles 90 and tapered face 96 of outer endwall 94. In the embodiment of FIG. 4, brush seal 86 provides more space for wire bristles 90 between BOAS 74 and outer endwall 94 in comparison to prior art brush seals because brush seal 86 does not have to devote space to multiple plates. Thus wire bristles 90 of brush seal 86 can be longer than wire bristles in the prior art. Increasing the length of wire bristles 90 reduces stress concentration in wire bristles 90 and increases the durability of wire bristles 90.

FIG. 5 is a cross-sectional view of a third exemplary embodiment of brush seal 86 connected to a main body of a first engine component and extending toward a second engine component and toward a third engine component. The first engine component in FIG. 5 can be BOAS support 98. The second engine component in FIG. 5 can be BOAS 100. The third engine component in FIG. 5 can be vane support 102. Vane support 102 can be an engine component that supports a vane cluster (not shown) disposed downstream and aft of BOAS 100. Plate 88 in FIG. 5 is a ring that extends around center axis A (shown in FIG. 1) of gas turbine engine 20 and that extends axially relative center axis A. Wire bristles 90 are arranged in a hoop around plate 88. Wire bristles 90 and plate 88 are positioned radially relative BOAS support 98 such that BOAS support 98 is disposed around wire bristles 90 and wire bristles 90 are disposed radially between BOAS support 98 and plate 88. Wire bristles 90 extend axially forward from plate 88 toward BOAS 100 and across a gap between BOAS 100 and BOAS support 98. Wire bristles 90 can also extend axially aft from plate 88 toward vane support 102 and across a gap between BOAS support 98 and vane support 102.

Joint 92A and joint 92B are weld joints that connect wire bristles 90 and plate 88 to BOAS support 98. Joint 92A can be axially positioned proximate an upstream end of plate 88, and joint 92B can be axially positioned proximate a downstream end of plate 88. Joint 92A is configured to prevent air or gas from leaking between the interface between wire bristles 90 and BOAS support 98 from the gap between BOAS 100 and BOAS support 98. If any leakage occurs across brush seal 86 in the gap between BOAS 100 and BOAS support 98, the leakage will occur along leakage flowpath L1. Joint 92B is configured to prevent air or gas from leaking between the interface between wire bristles 90 and BOAS support 98 from the gap between vane support 102 and BOAS support 98. If any leakage occurs across brush seal 86 in the gap between vane support 102 and BOAS support 98, the leakage will occur along leakage flowpath L2.

In view of the foregoing description, it will be recognized that the present disclosure provides numerous advantages and benefits. For example, the present disclosure provides brush seal 86 with plate 88, wire bristles 90, and joint 92. Joint 92 connects wire bristles 90 and plate 88 to a first engine component. Joint 92 also seals the interface between bristles 90 and the first engine component so that airflow or other gas flow is unable to leak into the interface and around brush seal 86. As discussed above with reference to FIG. 3, joint 92 can reduce leakage across brush seal 86 by as much as 20% in comparison with the leakage across prior art brush seals. Reducing or stopping leakage flow across brush seal 86 increases the efficiency of cooling airflow F in plenum 68 (shown in FIG. 2), which in turn increases the fuel efficiency of gas turbine engine 20. Brush seal 86 is also lighter in weight in comparison to prior art brush seals because brush seal 86 does not include mechanical fasteners and multiple plates as used in prior art brush seals. Reducing the weight of brush seal 86 reduces the overall weight of gas turbine engine 20, which increases the fuel efficiency of gas turbine engine 20.

The following are non-exclusive descriptions of possible embodiments of the present invention.

In one embodiment, an engine component for a gas turbine engine includes a main body and a plate. The engine component also includes a plurality of sealing elements disposed between the plate and the main body. A joint connects both the plate and the plurality of wire bristles to the main body and the joint is configured to prevent gas leakage between the main body, the plate, and the plurality of wire bristles.

The engine component of the preceding paragraph can optionally include, additionally and/or alternatively, any one or more of the following features, configurations and/or additional components:
the plurality of sealing elements comprises a plurality of wire bristles;
the joint is a weld joint connecting the plurality of wire bristles to both the plate and the main body;
the engine component is selected from the group consisting of blade outer air seals, blade outer air seal supports, vane outer endwalls, vane supports, vane inner endwalls, diffuser cases, core casing, and mid-turbine frames; and/or
the plate is an annular plate that extends around a center axis of the gas turbine engine, the plurality of wire bristles are arranged in a hoop around the center axis, and at least a portion of the main body of the engine component is disposed radially outward of both the plate and the plurality of wire bristles relative the center axis.

In another embodiment, a gas turbine engine includes a first engine component and a second engine component. A flowpath extends between the first engine component and the second engine component. The gas turbine engine also includes a brush seal. The brush seal includes a plate and a plurality of wire bristles. The plurality of wire bristles is disposed between the plate and the first engine component. The plurality of bristles extends across the flowpath from the first engine component toward the second engine component. A joint connects both the plate and the plurality of wire bristles to the first engine component and the joint is configured to prevent gas leakage between the first engine component and the brush seal.

The gas turbine engine of the preceding paragraph can optionally include, additionally and/or alternatively, any one or more of the following features, configurations and/or additional components:
the joint is a weld joint between the first engine component and both the wire bristles and the plate;
the first engine component is selected from the group consisting of blade outer air seals, blade outer air seal supports, vane outer endwalls, vane supports, vane inner endwalls, diffuser cases, core casing, and mid-turbine frames, and wherein the second engine component is selected from the group consisting of blade outer air seals, blade outer air seal supports, vane outer endwalls, vane supports, and drive shafts;
the joint reduces leakage across the brush seal by as much as 20%;
the plate is an annular plate that extends around a center axis of the gas turbine engine and extends radially relative the center axis;
the plurality of wire bristles is arranged into a hoop and extends radially inward from the plate toward the second engine component;
the plate is a ring that extends around a center axis of the gas turbine engine and extends axially relative the center axis;
the plurality of wire bristles is arranged in a hoop around the plate, and wherein the plurality of wire bristles extends axially forward from the plate toward the second engine component;
the first engine component is disposed around the plurality of wire bristles;
the plurality of wire bristles extends axially aft from the plate toward a third engine component;
the third engine component is selected from the group consisting of blade outer air seals, blade outer air seal supports, vane outer endwalls, and vane supports;
the plate is a ring that extends around a center axis of the gas turbine engine and extends axially relative the center axis and tapers radially outward relative the center axis;
the plurality of wire bristles is arranged around the plate, and wherein the plurality of wire bristles extends axially forward from the plate toward the second engine component; and/or
the first engine component is disposed around the plurality of wire bristles.

In another embodiment, a method for assembling a brush seal inside a leakage flowpath between a first engine component and a second engine component includes connecting a plurality of wire bristles to a plate. The plurality of wire bristles and the plate are positioned relative the first engine component such that the plurality of wire bristles is disposed between the plate and the first engine component. The plurality of wire bristles and the plate are welded to the first engine component. The first engine component is assembled relative the second engine component such that the plurality of wire bristles extends into the leakage flowpath from the first engine component toward the second engine component.

Any relative terms or terms of degree used herein, such as "substantially", "essentially", "generally", "approximately", and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transitory vibrations and sway movements, temporary alignment or shape variations induced by operational conditions, and the like.

While the invention has been described with reference to an exemplary embodiment(s), it will be understood by those skilled in the art that various changes may be made and equivalents may be substituted for elements thereof without departing from the scope of the invention. For example, while FIG. 3 shows the first engine component as core casing 66, the first engine component can selected from any component in the group consisting of blade outer air seals, blade outer air seal supports, vane outer endwalls, vane supports, vane inner endwalls, diffuser cases, core casing and mid-turbine frames. In another example, while FIG. 3 shows the second engine component as mounting structure 72, the second engine component can be selected from any component in the group consisting of blade outer air seals, blade outer air seal supports, vane outer endwalls, vane supports, and drive shafts. Also, while FIG. 5 describes the third component as being vane support 102, the third component can be any component from the group consisting of blade outer air seals, blade outer air seal supports, vane outer endwalls, and vane supports. In another example, wire bristles 90 can be substituted for a plurality of metal leafs or metal reeds. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An engine component for a gas turbine engine comprises:
a main body;
a plate (88);
a plurality of sealing elements disposed between the plate and the main body; and
a joint connecting both the plate and the plurality of wire bristles to the main body and configured to prevent gas leakage between the main body, the plate, and the plurality of wire bristles.

2. The engine component of claim 1, wherein the plurality of sealing elements comprises a plurality of wire bristles.

3. The engine component of claim 2, wherein the joint is a weld joint connecting the plurality of wire bristles to both the plate and the main body.

4. The engine component of claim 3, wherein the engine component is selected from the group consisting of blade outer air seals, blade outer air seal supports, vane outer endwalls, vane supports, vane inner endwalls, diffuser cases, core casing, and mid-turbine frames.

5. The engine component of claim 3, wherein the plate is an annular plate that extends around a center axis of the gas turbine engine, the plurality of wire bristles are arranged in a hoop around the center axis, and at least a portion of the main body of the engine component is disposed radially outward of both the plate and the plurality of wire bristles relative the center axis.

6. A gas turbine engine comprises:
a first engine component;
a second engine component;
a flowpath extending between the first engine component and the second engine component;
a brush seal (86), wherein the brush seal (86) comprises:
a plate (88);
a plurality of wire bristles (90), wherein the plurality of wire bristles (90) is disposed between the plate (88) and the first engine component, and wherein the plurality of bristles extends across the flowpath from the first engine component toward the second engine component; and
a joint connecting both the plate and the plurality of wire bristles (90) to the first engine component and configured to prevent gas leakage between the first engine component and the brush seal (86).

7. The gas turbine engine of claim 6, wherein the joint is a weld joint between the first engine component and both the wire bristles (90) and the plate (88).

8. The gas turbine engine of claim 7, wherein the first engine component is selected from the group consisting of blade outer air seals, blade outer air seal supports, vane outer endwalls, vane supports, vane inner endwalls, diffuser cases, core casing, and mid-turbine frames, and wherein the second engine component is selected from the group consisting of blade outer air seals, blade outer air seal supports, vane outer endwalls, vane supports, and drive shafts.

9. The gas turbine engine of claim 6, 7 or 8, wherein the plate (88) is an annular plate that extends around a center axis of the gas turbine engine and extends radially relative the center axis, and optionally
wherein the plurality of wire bristles (90) is arranged into a hoop and extends radially inward from the plate toward the second engine component.

10. The gas turbine engine of claim 6, wherein the plate is a ring that extends around a center axis of the gas turbine engine and extends axially relative the center axis.

11. The gas turbine engine of claim 10, wherein the plurality of wire bristles (90) is arranged in a hoop around the plate, and wherein the plurality of wire bristles (90) extends axially forward from the plate (88) toward the second engine component.

12. The gas turbine engine of claim 11, wherein the first engine component is disposed around the plurality of wire bristles (90).

13. The gas turbine engine of claim 12, wherein the plurality of wire bristles (90) extends axially aft from the plate toward a third engine component, and optionally
wherein the third engine component is selected from the group consisting of blade outer air seals, blade outer air seal supports, vane outer endwalls, and vane supports.

14. The gas turbine engine of claim 6, wherein the plate (88) is a ring that extends around a center axis of the gas turbine engine and extends axially relative the center axis and tapers radially outward relative the center axis.

15. The gas turbine engine of claim 14, wherein the plurality of wire bristles (90) is arranged around the plate, and wherein the plurality of wire bristles (90) extends axially forward from the plate toward the second engine component, and optionally
wherein the first engine component is disposed around the plurality of wire bristles (90).
